# EUROPEAN PATENT SPECIFICATION

(11) **EP 3 483 624 B1**
(45) Date of publication and mention of the grant of the patent: **22.04.2020**
(21) Application number: 18186487.7
(22) Date of filing: 31.07.2018
(51) Int. Cl.: G01S 7/40, G01S 13/90

(54) **RADAR REFLECTOR SYSTEM FOR CALIBRATING SYNTHETIC APERTURE RADAR FOR ARTIFICIAL SATELLITE**
RADARREFLEKTORSYSTEM ZUR KALIBRIERUNG EINES RADARS MIT SYNTHETISCHER APERTUR FÜR EINEN KÜNSTLICHEN SATELLITEN
SYSTÈME DE RÉFLECTEUR RADAR POUR ÉTALONNER UN RADAR D'OUVERTURE SYNTHÉTIQUE D'UN SATELLITE ARTIFICIEL

(30) Priority: 10.11.2017 KR 20170149261
(43) Date of publication of application: 15.05.2019
(73) Proprietor: Korea Aerospace Research Institute, Daejeon 34133 (KR)
(72) Inventor: SHIN, Jae Min, 34133 Daejeon (KR); LEE, Seon Ho, 34133 Daejeon (KR)
(74) Representative: Manitz Finsterwald Patent- und Rechtsanwaltspartnerschaft mbB

(56) References cited:
- WESSEL B ET AL: "TanDEM-X: DEM Calibration Concept", PROCEEDINGS / 2008 IEEE INTERNATIONAL GEOSCIENCE & REMOTE SENSING SYMPOSIUM : JULY 6 - 11, 2008, JOHN B. HYNES VETERANS MEMORIAL CONVENTION CENTER, BOSTON, MASSACHUSETTS, U.S.A, IEEE, PISCATAWAY, NJ, 7 July 2008 (2008-07-07), pages III-111-III-114, XP031422446, ISBN: 978-1-4244-2807-6
- HUESO GONZALEZ J ET AL: "Development of TanDEM-X DEM calibration concept", MICROWAVE CONFERENCE, 2007. EUROPEAN, IEEE, PI, 1 October 2007 (2007-10-01), pages 1743-1746, XP031192160, ISBN: 978-2-87487-001-9

## Description

### BACKGROUND

### Field

The present disclosure relates to a radar reflector system for calibrating a synthetic aperture radar for an artificial satellite.

### Description of the Related Art

In general, to calibrate a synthetic aperture radar (SAR) for an artificial satellite, it is necessary to perform processes of installing a reference target on a ground surface, capturing an image of the reference target through the synthetic aperture radar, and analyzing the captured image.

The synthetic aperture radar refers to a system that obtains a two-dimensional image by inputting microwaves into an object through an antenna and capturing a signal disturbed at a rear side of the object. In order to calibrate the synthetic aperture radar system, it is necessary to perform the processes of installing the reference target on the ground and analyzing the image captured by the synthetic aperture radar. The reference target needs to be installed at an expansive and stable location where there is no element that disturbs signals, and the reference targets need to have various shapes and sizes.

A radar reflector system for calibrating the synthetic aperture radar in the related art is used in the state in which the reference target is fixed onto the ground surface. In particular, the reference target is a technical element to be considered, and the reference target needs to be installed at an expansive and stable location where there is no element that disturbs signals. The reference targets need to have various shapes and sizes like a three-plate reflector, a two-plate reflector, or the like in order to generally perform polarimetric calibration pointing calibration, radiometric calibration, and geometric calibration.

However, the radar reflector system for calibrating the synthetic aperture radar for an artificial satellite in the related art still has problems that it is difficult to find the expansive and stable location for installing the reference target, a large amount of costs is required to monopolize, maintain, and manage the installation location for a long period of time even though the installation location is found, and signal disturbance still occurs due to management structures (e.g., protective fences and berms, holes, etc.) for protecting the reference target from wild animals. For reference, the reference target is inevitably installed in other countries such as Mongolia because such an installation location cannot be found in Korea, but there is a problem in that it is particularly difficult to periodically manage the reference target because the reference target is installed at a location where there is neither road nor town even though the reference target is installed in other countries.

In addition, because the reference target is fixedly installed onto the ground surface by basic civil construction and manufactured as a weight member significantly heavy in weight to provide durability against rain, wind, and the like, there are problems in that a position and a shape of the reference target cannot be changed, and reflectors, which are the reference targets and have various shapes and sizes, need to be separately and individually manufactured and then fixed onto the ground surface, and as a result, a large amount of costs is required.

WESSEL B ET AL, "TanDEM-X: DEM Calibration Concept", PROCEEDINGS / 2008 IEEE INTERNATIONAL GEOSCIENCE & REMOTE SENSING SYMPOSIUM: JULY 6 - 11, 2008, JOHN B. HYNES VETERANS MEMORIAL CONVENTION CENTER, BOSTON, MASSACHUSETTS, U.S.A, IEEE, PISCATAWAY, NJ, (20080707), ISBN 978-1-4244-2807-6, pages III-111 - III-114 discloses a radar reflector system in accordance with the preamble of claim 1.

HUESO GONZALEZ J ET AL, "Development of TanDEM-X DEM calibration concept", MICROWAVE CONFERENCE, 2007. EUROPEAN, IEEE, PI, (20071001), ISBN 978-2-87487-001-9, pages 1743 - 1746 discloses a concept for calibrating synthetic aperture radars.

### SUMMARY

The present disclosure has been made in an effort to provide a radar reflector system for calibrating a synthetic aperture radar for an artificial satellite, which is capable of being operated even for a short time and maintained and managed at a low cost.

To achieve the aforementioned object, a radar reflector system for calibrating a synthetic aperture radar according to claim 1 is provided.

As an example, the reflector may include any one of a metallic plate, a metallic mesh, a metallic thin film, and a metallic punched plate.

As another example, the reflector may include: a main reflective member; and an auxiliary reflective member which is slidably provided on the main reflective member.

As still another example, the reflector may further include a deploying unit which is provided between the main reflective member and the auxiliary reflective member and applies moving power to the auxiliary reflective member so that the auxiliary reflective member slides.

As yet another example, the reflector may include: a main reflective member; and an auxiliary reflective member which is rotatably provided on the main reflective member.

As still yet another example, the reflector may include: a central shaft; and a reflective member which has one end provided on the central shaft, is wound around the central shaft, and is unwound and used as necessary.

An electromagnetic wave absorber may be applied onto an outer surface of the flight module in order to minimize signal reflection.

The flight module may be detachably provided on the reflector. For example, the flight module may be detachably provided on the reflector by a docking structure, a fastening bolt, a magnet, or the like. Furthermore, an interval maintaining member such as a rod may be further provided on any one of the flight module and the reflector. In this case, the interval maintaining member may be detachably provided on the remaining one of the flight module and the reflector by a docking structure, a fastening bolt, a magnet, or the like.

The one or more flight modules may include: a first flight module which holds one portion of the reflector; and a second flight module which holds the other portion of the reflector, and the control unit may control the first and second flight modules so that the first and second flight modules fly in formation such that a shape of the reflector is maintained.

The control unit may be mounted on any one of the first and second flight modules or may be provided in a separate ground control center and may control the first and second flight modules through communication.

The radar reflector system for calibrating the synthetic aperture radar according to the exemplary embodiment of the present disclosure as described above may have the following effects.

According to the exemplary embodiment of the present disclosure, the radar reflector system includes the reflector, the one or more flight modules, and the control unit, the reflector reflects electromagnetic waves, the flight modules are provided on the reflector to float the reflector in the air, and the control unit provides the technical configuration for controlling the flight modules, such that the reflector may be operated in the air by the flight modules and the control unit, and as a result, the reflector may be used even for a short time. Ultimately, since the reflector may be operated in the air, it is not necessary to find a separate installation location, no basic civil construction for fixing the reflector on the ground surface is required, and no management structure such as a protective fence and berm is required, and as a result, no cost is incurred to monopolize, maintain, and manage the installation location for a long period of time, and no cost is incurred for the management structure such as a protective fence and berm.

In addition, according to the exemplary embodiment of the present disclosure, it is possible to obtain information required for calibration by operating the reflector in the air for approximately several tens of seconds by using the flight modules and the control unit, such that no durability against rain and wind is required, and as a result, it is possible to reduce a weight of the reflector and variously change a size or a shape of the reflector. Ultimately, only one reflector may be used to perform polarimetric calibration as well as pointing calibration, radiometric calibration, and geometric calibration by changing a size or a shape of the reflector and changing a position and an angle of the reflector in the air by using the flight modules.

### BRIEF DESCRIPTION OF THE DRAWINGS

FIG. 1 is a view schematically illustrating a radar reflector system for calibrating a synthetic aperture radar for an artificial satellite according to a first exemplary embodiment of the present disclosure.
FIG. 2 is a block diagram schematically illustrating an example of a control unit of the radar reflector system for calibrating the synthetic aperture radar illustrated in FIG. 1.
FIG. 3 is a block diagram schematically illustrating another example of the control unit of the radar reflector system for calibrating the synthetic aperture radar illustrated in FIG. 1.
FIG. 4 is a view illustrating various examples of reflectors of the radar reflector system for calibrating the synthetic aperture radar illustrated in FIG. 1.
FIG. 5 is a view schematically illustrating a radar reflector system for calibrating a synthetic aperture radar according to a second exemplary embodiment of the present disclosure.
FIG. 6 is a view schematically illustrating a radar reflector system for calibrating a synthetic aperture radar according to a third exemplary embodiment of the present disclosure.
FIG. 7 is a view schematically illustrating a radar reflector system for calibrating a synthetic aperture radar according to a fourth exemplary embodiment of the present disclosure.
FIG. 8 is a view schematically illustrating a radar reflector system for calibrating a synthetic aperture radar according to a fifth exemplary embodiment of the present disclosure.
FIG. 9 is a view illustrating a modified example of part "A" in FIG. 1.

### DETAILED DESCRIPTION OF THE PREFERRED EMBODIMENT

Hereinafter, exemplary embodiments of the present disclosure will be described in detail with reference to the accompanying drawings so that those skilled in the technical field to which the present disclosure pertains may easily carry out the exemplary embodiment. However, the present disclosure may be implemented in various different ways, and is not limited to exemplary embodiments described herein.

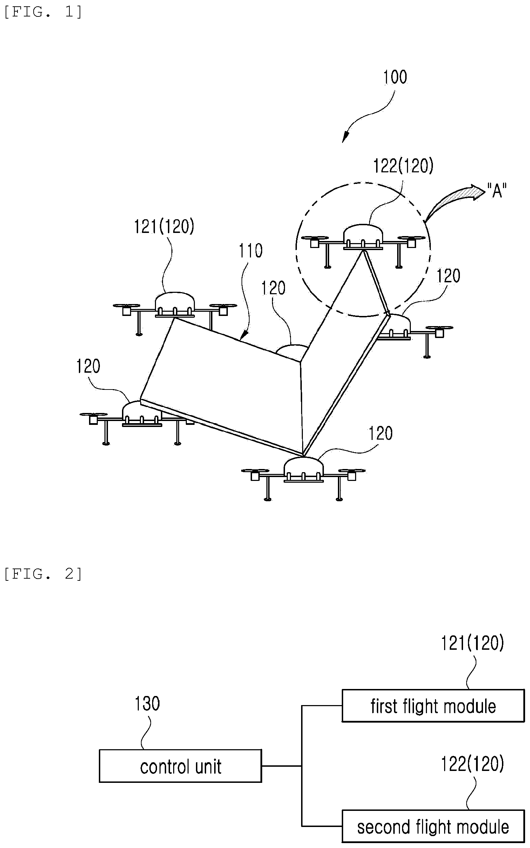

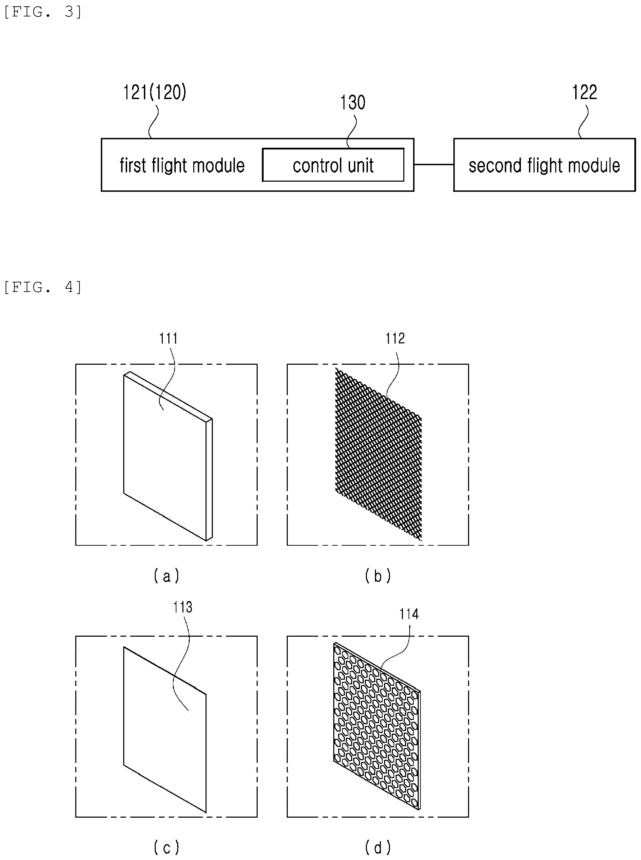

FIG. 1 is a view schematically illustrating a radar reflector system for calibrating a synthetic aperture radar for an artificial satellite according to a first exemplary embodiment of the present disclosure, FIG. 2 is a block diagram schematically illustrating an example of a control unit of the radar reflector system for calibrating the synthetic aperture radar illustrated in FIG. 1, and FIG. 3 is a block diagram schematically illustrating another example of the control unit of the radar reflector system for calibrating the synthetic aperture radar illustrated in FIG. 1. FIG. 4 is a view illustrating various examples of reflectors of the radar reflector system for calibrating the synthetic aperture radar illustrated in FIG. 1.

A radar reflector system for calibrating a synthetic aperture radar for an artificial satellite (hereinafter, simply referred to as a 'synthetic aperture radar') according to a first exemplary embodiment of the present disclosure includes a reflector, one or more flight modules, and a control unit, as illustrated in FIGS. 1 to 4. Hereinafter, the respective constituent elements will be described in detail still with reference to FIGS. 1 to 4.

The reflector is a constituent element that reflects electromagnetic waves to a reference target for calibrating the synthetic aperture radar for an artificial satellite. In particular, as illustrated in FIG. 1, the reflector has the one or more flight modules so that the reflector operates while floating in the air.

For example, as illustrated in FIG. 4, the reflector may include any one of a metallic plate 111, a metallic mesh 112, a metallic thin film 113, and a metallic punched plate 114. In particular, the metallic mesh, the metallic thin film, and the metallic punched plate, which are relatively lighter in weight than the metallic plate, is advantageous in floating in the air because a load, which affects the flight modules, is reduced. In addition, unlike the metallic plate or the metallic thin film, the metallic mesh or the metallic punched plate, which has multiple holes, may be more advantageous in floating in the air because the metallic mesh or the metallic punched plate may minimize resistance against air from wind in the air.

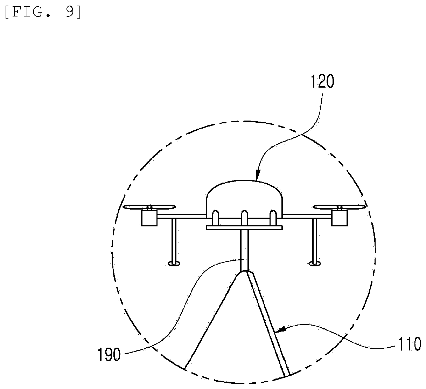

As illustrated in FIG. 1, the flight modules are constituent elements for floating the reflector, and the flight modules may be provided on the reflector. In particular, the flight modules need to be separated from the reflector when the reflector does not operate because the reflector operates in the air just for approximately several tens of seconds, and positions of the flight modules need to be changed depending on an environment (wind etc.) in the air or a shape and a size of the reflector, and as a result, the flight modules may be configured to be detachably provided on the reflector. For example, although not illustrated, the flight modules may be detachably provided on the reflector by a docking structure (a structure in which an insertion protrusion is inserted into an insertion groove), a fastening bolt, a magnet, Velcro, or the like. Further, as illustrated in FIG. 9, to minimize interference with the flight module 120 while the position or the like of the reflector 110 is adjusted, an interval maintaining member 190 such as a rod may further be provided on the reflector 110. In this case, although not illustrated, the interval maintaining member 190 may be detachably provided on the flight module by a docking structure (a structure in which an insertion protrusion is inserted into an insertion groove), a fastening bolt, a magnet, Velcro, or the like. Of course, the interval maintaining member may be provided on the flight module instead of the reflector. The flight module has propellers, motors, and a control means, and the flight module may receive flight information such as velocities and positions and may fly along a predetermined route.

In addition, to minimize disturbance of signals, for example, an electromagnetic wave absorber may be applied onto an outer surface of the flight module. As another example, although not illustrated, the flight module may be structured to be provided behind the reflector.

In addition, as illustrated in FIG. 1, the one or more flight modules 120 may include a first flight module which holds one portion of the reflector, and a second flight module which holds the other portion of the reflector. For reference, the number of flight modules may be determined depending on types of reflectors, and for example, in the case of a three-plate reflector, four flight modules may be provided.

The control unit is a constituent element for controlling flight of the flight module. For example, the control unit may be implemented by one or more microprocessors which are operated by a predetermined program, and the predetermined program may control the first and second flight modules so that the first and second flight modules fly in formation to maintain the shape of the reflector.

In addition, as an example, as illustrated in FIG. 2, the control unit may be provided in a separately provided ground control center and may control the first and second flight modules through communication, or as another example, as illustrated in FIG. 3, the control unit may be mounted on any one of the first and second flight modules and may control the first and second flight modules.

Therefore, with the aforementioned constituent elements, the reflector may be operated in the air by the flight modules and the control unit, and thus the reflector may be used even for a short time. Ultimately, since the reflector may be operated in the air, it is not necessary to find a separate installation location, no basic civil construction for fixing the reflector on the ground surface is required, and no management structure such as a protective berm is required, and as a result, no cost is incurred to monopolize, maintain, and manage the installation location for a long period of time. In addition, it is possible to obtain information required for calibration by operating the reflector in the air for approximately several tens of seconds by using the flight modules and the control unit, such that no durability against rain and wind is required, and as a result, it is possible to reduce a weight of the reflector and variously change a size or a shape of the reflector. Ultimately, only one reflector may be used to perform polarimetric calibration as well as pointing calibration, radiometric calibration, and geometric calibration by changing a size or a shape of the reflector and changing a position and an angle of the reflector in the air by using the flight modules.

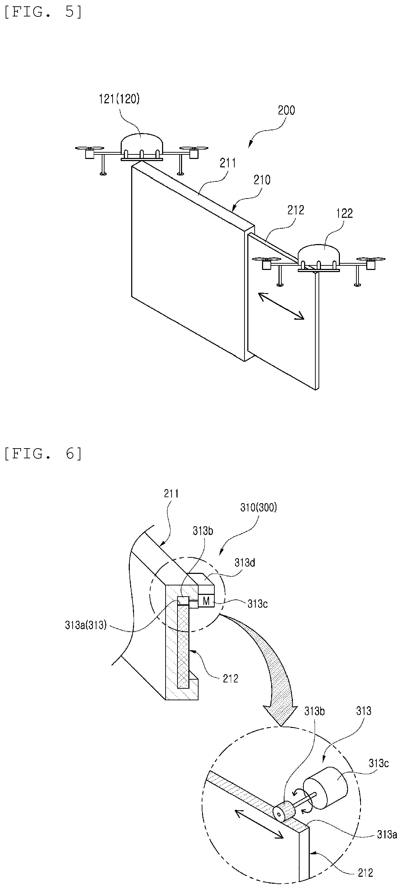

Hereinafter, a radar reflector system 200 for calibrating a synthetic aperture radar for an artificial satellite according to a second exemplary embodiment of the present disclosure will be described with reference to FIG. 5.

FIG. 5 is a view schematically illustrating the radar reflector system for calibrating the synthetic aperture radar according to the second exemplary embodiment of the present disclosure.

As illustrated in FIG. 5, the radar reflector system 200 for calibrating the synthetic aperture radar according to the second exemplary embodiment of the present disclosure is identical to that in the aforementioned first exemplary embodiment of the present disclosure except for a technical configuration in which a reflector 210 is deployed in a longitudinal direction, and thus the reflector 210 will be mainly described below.

As illustrated in FIG. 5, the reflector 210 may include a main reflective member 211 and an auxiliary reflective member 212. In particular, the auxiliary reflective member 212 may be provided to be slidable relative to the main reflective member 211.

In this case, as illustrated in FIG. 5, one or more flight modules 120 may include a first flight module 121 which is provided on the main reflective member 211, and a second flight module 122 which is provided on the auxiliary reflective member 212. Therefore, a length of the reflector 210 may be adjusted as the auxiliary reflective member 212 is extended or retracted in a longitudinal direction thereof relative to the main reflective member 211 by the first and second flight modules 121 and 122.

Furthermore, each of the main reflective member 211 and the auxiliary reflective member 212 may include any one of a metallic plate, a metallic mesh, a metallic thin film, and a metallic punched plate (*see* FIG. 4).

Hereinafter, a radar reflector system 300 for calibrating a synthetic aperture radar according to a third exemplary embodiment of the present disclosure will be described with reference to FIG. 6.

FIG. 6 is a view schematically illustrating the radar reflector system for calibrating the synthetic aperture radar according to the third exemplary embodiment of the present disclosure.

As illustrated in FIG. 6, the radar reflector system 300 for calibrating the synthetic aperture radar according to the third exemplary embodiment of the present disclosure is identical to that in the aforementioned second exemplary embodiment of the present disclosure except for a technical configuration in which a reflector 210 is deployed in a longitudinal direction thereof by a deploying unit 313, and thus the deploying unit 313 will be mainly described below.

As illustrated in FIG. 6, the deploying unit 313 is a constituent element that applies moving power to the auxiliary reflective member 212 so that the auxiliary reflective member 212 slides, and the deploying unit 313 may be provided between the main reflective member 211 and the auxiliary reflective member 212.

For example, as illustrated in FIG. 6, the deploying unit 313 may include a rack 313a, a pinion 313b, a motor 313c, and a battery 313d. The rack 313a may be provided on one surface of the auxiliary reflective member 212, the pinion 313b may be provided to engage with the rack 313a, the motor 313c is coupled to the pinion 313b through a shaft and may apply rotational force to the pinion 313b in a forward or reverse direction, and the battery 313d may supply electric power to the motor 313c.

Therefore, the rack 313a, which engages with the pinion 313b, may be moved to the left or right as the pinion 313b is rotated in the forward or reverse direction by the battery 313d and the motor 313c. Ultimately, the length of the reflector 210 may be adjusted as the auxiliary reflective member 212 is extended or retracted in the longitudinal direction thereof relative to the main reflective member 211.

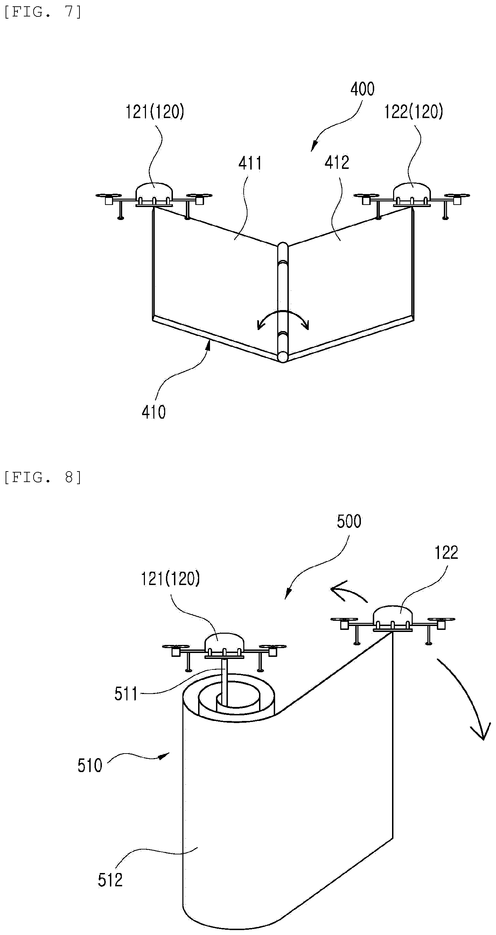

Hereinafter, a radar reflector system 400 for calibrating a synthetic aperture radar according to a fourth exemplary embodiment of the present disclosure will be described with reference to FIG. 7.

FIG. 7 is a view schematically illustrating the radar reflector system for calibrating the synthetic aperture radar according to the fourth exemplary embodiment of the present disclosure.

As illustrated in FIG. 7, the radar reflector system 400 for calibrating the synthetic aperture radar according to the fourth exemplary embodiment of the present disclosure is identical to that in the aforementioned first exemplary embodiment of the present disclosure except for a technical configuration in which a reflector 410 is unfolded and deployed, and thus the reflector 410 will be mainly described below.

As illustrated in FIG. 7, the reflector 410 may include a main reflective member 411 and an auxiliary reflective member 412. In particular, the auxiliary reflective member 412 may be provided to be rotatable relative to the main reflective member 411.

In this case, one or more flight modules 120 may include a first flight module 121 which is provided on the main reflective member 411, and a second flight module 122 which is provided on the auxiliary reflective member 412. Therefore, a length and a shape of the reflector may be changed as the auxiliary reflective member 412 is folded or unfolded relative to the main reflective member 411 by the first and second flight modules 121 and 122.

Furthermore, each of the main reflective member 411 and the auxiliary reflective member 412 may include any one of a metallic plate, a metallic mesh, a metallic thin film, and a metallic punched plate (*see* FIG. 4).

Meanwhile, although not illustrated, the auxiliary reflective member 412 may be configured to be rotated by a separate motor (not illustrated) relative to the main reflective member 411.

Hereinafter, a radar reflector system 500 for calibrating a synthetic aperture radar according to a fifth exemplary embodiment of the present disclosure will be described with reference to FIG. 8.

FIG. 8 is a view schematically illustrating the radar reflector system for calibrating the synthetic aperture radar according to the fifth exemplary embodiment of the present disclosure.

As illustrated in FIG. 8, the radar reflector system 500 for calibrating the synthetic aperture radar according to the fifth exemplary embodiment of the present disclosure is identical to that in the aforementioned first exemplary embodiment of the present disclosure except for a technical configuration in which a reflector 510 is deployed in a state in which the reflector 510 is wound in the form of a roll, and thus the reflector 510 will be mainly described below.

As illustrated in FIG. 8, the reflector 510 may include a central shaft 511 and a reflective member 512. In particular, one end of the reflective member 512 is provided on the central shaft 511, and the reflective member 512 may be wound around the central shaft 511 so that the reflective member 512 is unwound and used as necessary.

In this case, one or more flight modules 120 may include a first flight module 121 which is provided on the central shaft 511, and a second flight module 122 which is provided at the other end of the reflective member 512 and flies in a direction in which the reflective member 512 is unwound or wound. Therefore, the reflective member 512 may be unwound or wound in the form of a roll as the second flight module 122 flies in a state in which the first flight module 121 is stationary.

Furthermore, the reflective member 512 may include any one of a metallic plate, a metallic mesh, a metallic thin film, and a metallic punched plate (*see* FIG. 4). In addition, an electromagnetic wave absorber (not illustrated) may be applied onto an outer surface of the central shaft 511 in order to minimize signal disturbance.

Meanwhile, although not illustrated, as another modified example, the reflector may have a shape folded with pleats or may have a shape with reflective plate pieces overlapping one another like a window blind. For example, the reflector having the pleated shape or the window blind structure may be unfolded by the multiple flight modules 120, as described in the aforementioned fifth exemplary embodiment.

The radar reflector systems 100, 200, 300, 400, and 500 for calibrating the synthetic aperture radar according to the exemplary embodiments of the present disclosure as described above may have the following effects.

According to the exemplary embodiments of the present disclosure, each of the radar reflector systems includes the reflector 110, 210, 310, 410, or 510, the one or more flight modules 120, and the control unit 130, each of the reflectors 110, 210, 310, 410, and 510 reflects electromagnetic waves, the flight modules 120 are provided on the reflector to float the reflector in the air, and the control unit 130 provides the technical configuration for controlling the flight modules 120, such that each of the reflectors 110, 210, 310, 410, and 510 may be operated in the air by the flight modules 120 and the control unit 130, and as a result, each of the reflectors 110, 210, 310, 410, and 510 may be used even for a short time. Ultimately, since the reflector may be operated in the air, it is not necessary to find a separate installation location, no basic civil construction for fixing the reflector on the ground surface is required, and no management structure such as a protective berm is required, and as a result, no cost is incurred to monopolize, maintain, and manage the installation location for a long period of time.

In addition, according to the exemplary embodiments of the present disclosure, it is possible to obtain information required for calibration by operating the reflector 110, 210, 310, 410, or 510 in the air for approximately several tens of seconds by using the flight modules 120 and the control unit 130, such that no durability against rain and wind is required, and as a result, it is possible to reduce a weight of the reflector and variously change a size or a shape of the reflector. Ultimately, only one reflector may be used to perform polarimetric calibration as well as pointing calibration, radiometric calibration, and geometric calibration by changing a size or a shape of the reflector and changing a position and an angle of the reflector in the air by using the flight modules 120.

As described above, the configuration in which the flight modules are mounted on the reflector such that the reflector is raised in the air as the flight module flies has been described, and in this case, a drone may be applied as an example of the flight module. That is, the present disclosure may have a structure in which the drone is mounted on the reflector.

Although preferred examples of the present disclosure have been described in detail hereinabove, the right scope of the present disclosure is not limited thereto, and it should be clearly understood that many variations and modifications of those skilled in the art using the basic concept of the present disclosure, which is defined in the following claims, will also belong to the right scope of the present disclosure.

## Claims

1. A radar reflector system for calibrating a synthetic aperture radar for an artificial satellite, the radar reflector system comprising
a reflector (110; 210; 310; 410; 510) which reflects electromagnetic waves;
**characterized in that** the radar reflector system further comprises:
one or more flight modules (120; 121; 122) able to fly and to float the reflector in the air (110; 210; 310; 410; 510; and
a control unit (130) which controls the flight module (120).

2. The radar reflector system of claim 1, wherein the reflector includes any one of a metallic plate (111), a metallic mesh (112), a metallic thin film (113), and a metallic punched plate (114).

3. The radar reflector system of claim 1 or 2, wherein the reflector (210; 310) includes:
a main reflective member (211); and
an auxiliary reflective member (212), which is slidably provided on the main reflective member.

4. The radar reflector system of claim 3, wherein the reflector further includes a deploying unit (313) which is provided between the main reflective member (211) and the auxiliary reflective member (212) and applies moving power to the auxiliary reflective member (212) so that the auxiliary reflective member (212) slides.

5. The radar reflector system of claim 1 or 2, wherein the reflector (410) includes:
a main reflective member (411); and
an auxiliary reflective member (412), which is rotatably provided on the main reflective member (411).

6. The radar reflector system of claim 1, wherein the reflector (510) includes:
a central shaft (511); and
a reflective member (512), which has one end provided on the central shaft (511), is wound around the central shaft (511), and is unwound and used as necessary.

7. The radar reflector system of any of the preceding claims, wherein an electromagnetic wave absorber is applied onto an outer surface of the flight module (120; 121; 122) in order to minimize signal reflection.

8. The radar reflector system of any of the preceding claims, wherein the flight module (120; 121; 122) is a drone detachably provided on the reflector (110; 210; 310; 410; 510).

9. The radar reflector system of any of the preceding claims, wherein the one or more flight modules (120; 121; 122) include:
a first flight module (121) which holds one portion of the reflector (110; 210; 310; 410; 510); and
a second flight module (122) which holds the other portion of the reflector (110; 210; 310; 410; 510), and
the control unit (130) controls the first and second flight modules (121, 122) so that the first and second flight modules (121, 122) fly in formation such that a shape of the reflector is maintained.

10. The radar reflector system of claim 9, wherein the control unit (130) is mounted on any one of the first and second flight modules (121, 122) or provided in a separate control center and controls the first and second flight modules (121, 122) through communication.

11. The radar reflector system of any of the preceding claims, wherein an interval maintaining member (190), such as a rod, is provided between the flight module (120; 121; 122) and the reflector (110; 210; 310; 410; 510).

## Patentansprüche

1. Radarreflektorsystem zur Kalibrierung eines Radars mit synthetischer Apertur für einen künstlichen Satelliten, wobei das Radarreflektorsystem umfasst
einen Reflektor (110; 210; 310; 410; 510), der elektromagnetische Wellen reflektiert;
**dadurch gekennzeichnet, dass** das Radarreflektorsystem ferner umfasst:
ein oder mehrere Flugmodule (120; 121; 122), die fliegen und den Reflektor (110; 210; 310; 410; 510) in der Luft schweben lassen können; und
eine Steuereinheit (130), die das Flugmodul (120) steuert.

2. Radarreflektorsystem nach Anspruch 1, wobei der Reflektor entweder eine Metallplatte (111), ein Metallgitter (112), einen dünnen Metallfilm (113) oder eine metallische Stanzplatte (114) umfasst.

3. Radarreflektorsystem nach Anspruch 1 oder 2, wobei der Reflektor (210; 310) umfasst:
ein Hauptreflexionselement (211); und
ein Zusatzreflexionselement (212), das verschiebbar auf dem Hauptreflexionselement vorgesehen ist.

4. Radarreflektorsystem nach Anspruch 3, wobei der Reflektor ferner eine Entfaltungseinheit (313) aufweist, die zwischen dem Hauptreflexionselement (211) und dem Zusatzsreflexionselement (212) vorgesehen ist und dem Zusatzreflexionselement (212) Bewegungskraft zuführt, so dass das Zusatzreflexionselement (212) gleitet.

5. Radarreflektorsystem nach Anspruch 1 oder 2, wobei der Reflektor (410) umfasst:
ein Hauptreflexionselement (411); und
ein Zusatzsreflexionselement (412), das drehbar auf dem Hauptreflexionselement (411) vorgesehen ist.

6. Radarreflektorsystem nach Anspruch 1, wobei der Reflektor (510) umfasst:
eine zentrale Welle (511); und
ein Reflexionselement (512), das mit einem Ende auf der zentralen Welle (511) vorgesehen ist, um die zentrale Welle (511) gewickelt ist und je nach Bedarf abgerollt und verwendet wird.

7. Radarreflektorsystem nach einem der vorhergehenden Ansprüche, wobei ein Absorber für elektromagnetische Wellen auf eine Außenfläche des Flugmoduls (120; 121; 122) aufgebracht ist, um Signalreflexion zu minimieren.

8. Radarreflektorsystem nach einem der vorhergehenden Ansprüche, wobei das Flugmodul (120; 121; 122) eine Drohne ist, die abnehmbar an dem Reflektor (110; 210; 310; 410; 510) vorgesehen ist.

9. Radarreflektorsystem nach einem der vorhergehenden Ansprüche, wobei das eine oder die mehreren Flugmodule (120; 121; 122) umfassen:
ein erstes Flugmodul (121), das einen Teil des Reflektors (110; 210; 310; 410; 510) hält; und
ein zweites Flugmodul (122), das den anderen Teil des Reflektors (110; 210; 310; 410; 510) hält, und
die Steuereinheit (130) das erste und zweite Flugmodul (121, 122) so steuert, dass das erste und zweite Flugmodul (121, 122) in Formation fliegen, so dass eine Form des Reflektors beibehalten wird.

10. Radarreflektorsystem nach Anspruch 9, wobei die Steuereinheit (130) an einem der ersten und zweiten Flugmodule (121, 122) montiert oder in einem separaten Steuerzentrum vorgesehen ist und die ersten und zweiten Flugmodule (121, 122) durch Kommunikation steuert.

11. Radarreflektorsystem nach einem der vorhergehenden Ansprüche, wobei ein Abstandshalteelement (190), wie beispielsweise eine Stange, zwischen dem Flugmodul (120; 121; 122) und dem Reflektor (110; 210; 310; 410; 510) vorgesehen ist.

## Revendications

1. Système de réflecteur radar pour étalonner un radar d'ouverture synthétique pour un satellite artificiel, le système de réflecteur radar comprenant
un réflecteur (110 ; 210 ; 310 ; 410 ; 510) qui réfléchit des ondes électromagnétiques ;
**caractérisé en ce que** le système de réflecteur radar comprend en outre :
un ou plusieurs modules de vol (120 ; 121 ; 122) capables de faire voler et de faire flotter le réflecteur dans l'air (110 ; 210 ; 310 ; 410 ; 510) ; et
une unité de commande (130) qui commande le module de vol (120).

2. Système de réflecteur radar selon la revendication 1, dans lequel le réflecteur inclut un élément quelconque parmi une plaque métallique (111), un treillis métallique (112), un film mince métallique (113), et une plaque poinçonnée métallique (114).

3. Système de réflecteur radar selon la revendication 1 ou 2, dans lequel le réflecteur (210 ; 310) inclut :
un élément réfléchissant principal (211) ; et
un élément réfléchissant auxiliaire (212), qui est prévu en coulissement sur l'élément réfléchissant principal.

4. Système de réflecteur radar selon la revendication 3, dans lequel le réflecteur inclut une outre une unité de déploiement (313) qui est prévue entre l'élément réfléchissant principal (211) et l'élément réfléchissant auxiliaire (212) et qui applique une énergie de déplacement à l'élément réfléchissant auxiliaire (212) de sorte que l'élément réfléchissant auxiliaire (212) coulisse.

5. Système de réflecteur radar selon la revendication 1 ou 2, dans lequel
le réflecteur (410) inclut :
un élément réfléchissant principal (411) ; et
un élément réfléchissant auxiliaire (412) qui est prévu en rotation sur l'élément réfléchissant principal (411).

6. Système de réflecteur radar selon la revendication 1, dans lequel le réflecteur (510) inclut :
un arbre central (511) ; et
un élément réfléchissant (512) qui a une extrémité prévue sur l'arbre central (511), qui est enroulée autour de l'arbre central (511) et qui est déroulée et utilisée si nécessaire.

7. Système de réflecteur radar selon l'une quelconque des revendications précédentes, dans lequel un absorbeur d'ondes électromagnétiques est appliqué sur une surface extérieure du module de vol (120 ; 121 ; 122) afin de minimiser une réflexion de signal.

8. Système de réflecteur radar selon l'une quelconque des revendications précédentes, dans lequel le module de vol (120, 121, 122) est un drone prévu de manière détachable sur le réflecteur (110 ; 210 ; 310 ; 410 ; 510).

9. Système de réflecteur radar selon l'une quelconque des revendications précédentes, dans lequel lesdits un ou plusieurs modules de vol (120 ; 121 ; 122) incluent :
un premier module de vol (121) qui maintient une portion du réflecteur (110; 210 ; 310 ; 410 ; 510); et
un second module de vol (122) qui maintient l'autre portion du réflecteur (110 ; 210 ; 310 ; 410 ; 510), et
l'unité de commande (130) qui commande les premier et second modules de vol (121, 122) de sorte que les premier et second modules de vol (121, 122) volent en formation de sorte qu'une forme du réflecteur est conservée.

10. Système de réflecteur radar selon la revendication 9, dans lequel l'unité de commande (130) est montée sur un module quelconque parmi le premier et le second module de vol (121, 122) ou est prévue dans un centre de commande séparé et commande les premier et second modules de vol (121, 122) via une communication.

11. Système de réflecteur radar selon l'une quelconque des revendications précédentes, dans lequel un élément de conservation d'intervalle (190), tel qu'un barreau, est prévu entre le module de vol (120 ; 121 ; 122) et le réflecteur (110 ; 210 ; 310 ; 410 ; 510).
